Europäisches Patentamt

European Patent Office

Office européen des brevets

(19)

(11) Veröffentlichungsnummer : **0 165 585 B1**

(12) **EUROPÄISCHE PATENTSCHRIFT**

(45) Veröffentlichungstag der Patentschrift :
24.01.90

(21) Anmeldenummer : 85107486.4

(22) Anmeldetag : 18.06.85

(51) Int. Cl.⁵ : **B 29 B 17/02, C 08 J 11/08**

(54) Verfahren und Vorrichtung zum Entfernen von Gummi und/oder Kunststoff aus Verbundkörpern aus Metall und wenigstens einem dieser Materialien.

(30) Priorität : 20.06.84 DE 3422924

(43) Veröffentlichungstag der Anmeldung :
27.12.85 Patentblatt 85/52

(45) Bekanntmachung des Hinweises auf die Patenterteilung : 24.01.90 Patentblatt 90/04

(84) Benannte Vertragsstaaten :
AT BE CH DE FR GB IT LI LU NL SE

(56) Entgegenhaltungen :
CH--A-- 355 296
FR--A-- 2 248 135
GB--A-- 1 417 260
US--A-- 3 666 691
US--A-- 4 173 493

(73) Patentinhaber : FUCHS RECYCLING GMBH & CO KG
Reithallenstrasse 1
D-7601 Willstätt-Legelshurst (DE)

(72) Erfinder : Fuchs, Gerhard
Eschigweg 1
D-7640 Kehl-Bodersweier (DE)
Erfinder : Hertenstein, Roland R.
Bertholdstrasse 11.1
D-7630 Lahr (DE)
Erfinder : Quick, Hans-Gregor
Fritz-Reuter-Strasse 26
D-2070 Ahrensburg (DE)

(74) Vertreter : Blumbach Weser Bergen Kramer Zwirner
Hoffmann Patentanwälte
Radeckestrasse 43
D-8000 München 60 (DE)

EP 0 165 585 B1

## Beschreibung

Die Erfindung betrifft ein Verfahren und eine Vorrichtung zum Entfernen von Gummi und/oder Kunststoff aus Verbundkörpern aus Metall und wenigstens einem dieser Materialien gemäß dem Oberbegriff des Anspruches 1 bzw. 4 und 5.

Verfahren und Vorrichtungen dieser Art dienen dazu, aus als Abfall anfallenden Verbundkörpern aus Metall und Gummi und/oder Kunststoff die nichtmetallischen Komponenten zu entfernen und die getrennten Komponenten einer Wiederverwertung zuzuführen. Derartige Verbundkörper können ganz oder teilweise mit Gummi und/oder Kunststoff beschichtete Metallteile oder Gummi- und Kunststoffteile, die durch Metallteile verstärkt oder mit Metall versetzt sind, sein, also beispielsweise Gleiskettenglieder, Laufrollen, Maschinenteile, Kettenpolster, Kabelschrott, Computerschrott, Teppichböden etc.

Zur Entfernung von Gummi bei als Abfall anfallenden gummierten Metallteilen und zur Wiederverwendung der zurückgewonnenen Metallteile ist es bekanntgeworden, den Gummi mittels Hochfrequenz abzulösen oder mittels Kältemitteln zu verspröden und anschließend mechanisch zu entfernen. Diese Verfahren sind zum Teil aufwendig und im Falle der Hochfrequenzablösung durch die entstehenden Gase umweltbelastend. Schließlich ist bei einigen der bekannten Verfahren eine verhältnismäßig lange Prozessdauer erforderlich.

Durch die US-A-4 173 493 ist ferner ein Verfahren zum Entfernen von Gummi und/oder Kunststoff aus Verbundkörpern aus Metall bekannt geworden, bei dem diese Verbundkörper in ein erhitztes, flüssiges Lösungsmittel gebracht und hier die nichtmetallischen Komponenten aufgelöst und entfernt werden. Dies geschieht mittels einer Vorrichtung, die als Eintrittsöffnung einen oben offenen Einfülltrichter enthält, in den das zu behandelnde Material eingeworfen und mittels einer Rutsche unmittelbar in eine wenigstens teilweise mit dem flüssigen Lösungsmittel gefüllte Behandlungstrommel befördert wird. Auf dem Weg dorthin sind sie kurzzeitig den heißen Dämpfen des Lösungsmittels ausgesetzt. Um die Umweltbelastung klein zu halten, wird der oben offene Einfülltrichter mittels einer Kühlwendel gekühlt, damit möglichst wenig von den Lösungsmitteldämpfen in die Umgebung entweichen kann.

Aufgabe der Erfindung ist es, ein Verfahren und eine Vorrichtung verfügbar zu machen, mit denen aus als Abfall anfallenden Verbundkörpern aus Metall und Gummi und/oder Kunststoff die nichtmetallischen Komponenten wirtschaftlich und ohne Umweltbelastung entfernt und die getrennten Komponenten einer Wiederverwertung zugeführt werden können. Trotz schonender Behandlung der Metallteile soll die Prozeßdauer kurz gehalten werden können.

Das erfindungsgemäße Verfahren ist durch die Merkmale der Ansprüche 1 und 4 gekennzeichnet, die erfindungsgemäße Vorrichtung durch die Merkmale des Anspruches 5. Vorteilhafte Ausgestaltungen des Verfahrens und der Vorrichtung sind den übrigen Ansprüchen zu entnehmen.

Bei dem Verfahren gemäß den Ansprüchen 1 bis 3 werden die Verbundkörper zunächst in einer Vorwärmzone des Reaktionsbehälters den heißen Dämpfen des Lösungsmittels ausgesetzt und hierdurch auf eine Temperatur zwischen 50 und 150 °C erhitzt. Hierbei werden in schonender Weise die Verbundkörper durchgewärmt und der Haftverbund zwischen dem Metall und dem Gummi oder Kunststoff herabgesetzt. Die durchwärmten Verbundkörper werden dann in das erhitzte Lösungsmittel eingetaucht, dessen Temperatur auf einen Betrag zwischen 150 bis 550 °C vorzugsweise zwischen 150 und 350 °C, eingestellt ist. Hier erfolgt die Ablösung und Auflösung der nichtmetallischen Komponenten innerhalb einer Zeitdauer von wenigen Minuten. Die Behandlung im Reaktionsbehälter erfolgt bei einem absoluten Gasdruck im Bereich von 0,5 bis 4,0 bar vorzugsweise von 0,5 bis 2,0 bar, wobei sich eine Prozeßführung mit Unterdruck als vorteilhaft erwiesen hat, da hier durch Verdampfen des Lösungsmittels bei relativ niedriger Temperatur das Trennen von Gummi und Kunststoff vom Metall bereits unterhalb 200 °C erfolgt und somit keine Temperaturschädigung empfindlicher Metalle eintritt. Die heißen Lösungsmitteldämpfe kondensieren zu einem wesentlichen Teil bei der Vorwärmung der Verbundkörper, der Rest wird in einer nachgeschalteten Kondensationsanlage zurückgewonnen und kann dem Prozeß oder, wo eine Wiederverwendung nicht möglich ist, als Edelschrott bei der Schaffung neuer Metallteile eingesetzt werden.

Die bei dem erstgenannten Verfahren im Lösungsmittelbad aufgelösten Gummi- und Kunststoffkomponenten ergeben zusammen mit dem Restlösungsmittel eine viskose. Masse mit einem Anteil von 65 bis 70 % Gummi und/oder Kunststoff. Diese Masse ist brennbar und kann als Brennstoff oder auch als Teilersatz für Bitumen als Bindemittel bei der Asphaltherstellung verwendet werden.

Die Vorrichtung zur Durchführung des Verfahrens enthält eine Reaktionszone im oder oberhalb des in einer heizbaren Wanne befindlichen Lösungsmittelbades und eine Vorwärmzone oberhalb oder neben der Wanne. Hierbei kann zwischen der Vorwärmzone und der Reaktionszone eine gasleitende Verbindung vorhanden sein — in diesem Fall bilden die aus der Reaktionszone in die Vorwärmzone gelangenden heißen Dämpfe des Lösungsmittels zumindest einen Teil der zur Vorwärmung benutzten Medien —, die beiden Zonen können aber auch durch eine Wand voneinander getrennt sein, so daß als Wärmeträger für die Vorwärmzone ein anderes Gas wie Heißluft oder die Abgase der Heizeinrichtung für die Wanne einsetzbar sind. Die erste Alternative ist insbesondere von Bedeutung bei Verfahren, bei denen die Verbundkörper in das erhitzte Lösungsmittel eingetaucht werden, das zweite bei Verfahren, bei denen nur in der Gasphase gearbeitet wird.

Die Behandlung von als Abfall anfallenden Kleinteilen wie Computerschrott, Kettenpolster, kleinere Maschinenteile etc. erfolgt vorzugsweise in einem schachtförmigen Behälter, in den das Ausgangsprodukt von oben über einen Einfüllschacht als Schüttgut eingebracht wird und die Metalle nach Zugabe der verbrauchten Stoffe über eine Sprüheinrichtung erneut zugeführt werden. Auf diese Weise wird sowohl die fühlbare Wärme im direkten Wärmetausch mit den Verbundkörpern in der Vorwärmzone als auch im indirekten Wärmetausch einer nachgeschalteten Kondensationsanlage nahezu vollständig ausgenutzt und damit ein wirtschaftlicher Prozeß ermöglicht. Gleichzeitig wird ein Entweichen von schädlichen Gasen des Lösungsmittels in die Atmosphäre verhindert. Außerdem wird durch die Vorwärmzone eine schonende Temperaturführung bei kurzer Prozeßdauer für den Ab- und Auflöseprozeß der nichtmetallischen Komponenten ermöglicht.

Als Lösungsmittel können bekannte Lösungsmittel für Gummi bzw. Kunststoff verwendet werden. Vorteilhaft sind Lösungsmittel auf der Basis von Mineralölen mit geeigneten Zusätzen oder ein erwärmtes Trichloräthylenbad.

Bei dem Verfahren nach Anspruch 4 werden die Verbundkörper nach dem Vorwärmen lediglich in der Gasphase des Lösungsmittels behandelt. Die Vorwärmung erfolgt durch Heißluft oder die heißen Abgase der Heizeinrichtung, durch die das Lösungsmittel in die Gasphase übergeführt wird. Mit diesem Verfahren ist in der Regel nur ein Ablösen bzw. eine Zerstören des Haftverbunds zwischen der metallischen und den nichtmetallischen Komponenten, nicht aber ein Auflösen der nichtmetallischen Komponenten möglich. In vielen Fällen z. B. bei mit Gummi beschichteten Laufrollen reicht dies jedoch aus, weil sich nach einer solchen Behandlung die Gummischicht leicht vom Metallkörper ablösen läßt.

Die zurückgewonnenen Metallteile können nach der üblichen Vorbehandlung (Sandstrahlen, Entfetten usw.) einem erneuten Gummierungs- oder Beschichtungsprozeß zugeführt werden und die nichtmetallischen Bestandteile im unteren Bereich ausgetragen werden. Die Behandlung von größeren und schwereren Teilen wie Laufrädern, Gleiskettengliedern, größeren Maschinenteilen etc. erfolgt vorzugsweise in einer horizontal ausgerichteten Vorrichtung, in der das Ausgangsprodukt in Körben die einzelnen Zonen bzw. Kammern durchfährt.

Die erfindungsgemäße Vorrichtung zeichnet sich nicht nur durch eine wirtschaftliche Betriebsweise, sondern auch durch eine Vielseitigkeit hinsichtlich des Einsatzmaterials und der Arbeitsweise aus. Alle wesentlichen, als Abfall anfallenden Gummi-Metall- oder Kunststoff-Metall-Verbindungen können eingesetzt werden, ferner besteht die Möglichkeit zum kontinuierlichen Betrieb, Chargenbetrieb oder Taktbetrieb.

Die Erfindung wird durch Ausführungsbeispiele anhand von drei Fig. näher erläutert. Es zeigen

Fig. 1 eine Vorrichtung, bei der die Vorwärmzone und die Reaktionszone innerhalb eines schachtförmigen Behälters angeordnet sind, und die insbesondere für Kleinteile geeignet ist,

Fig. 2 eine Vorrichtung, bei der die Vorwärmzone und die Reaktionszone als hintereinander angeordnete Kammern ausgebildet sind und der Transport der zu behandelnden Verbundkörper durch Körbe längs einer im wesentlichen horizontalen Förderbahn erfolgt, und

Fig. 3 eine Vorrichtung ähnlich der Vorrichtung nach Fig. 2 für eine Behandlung der Verbundkörper in der Gasphase.

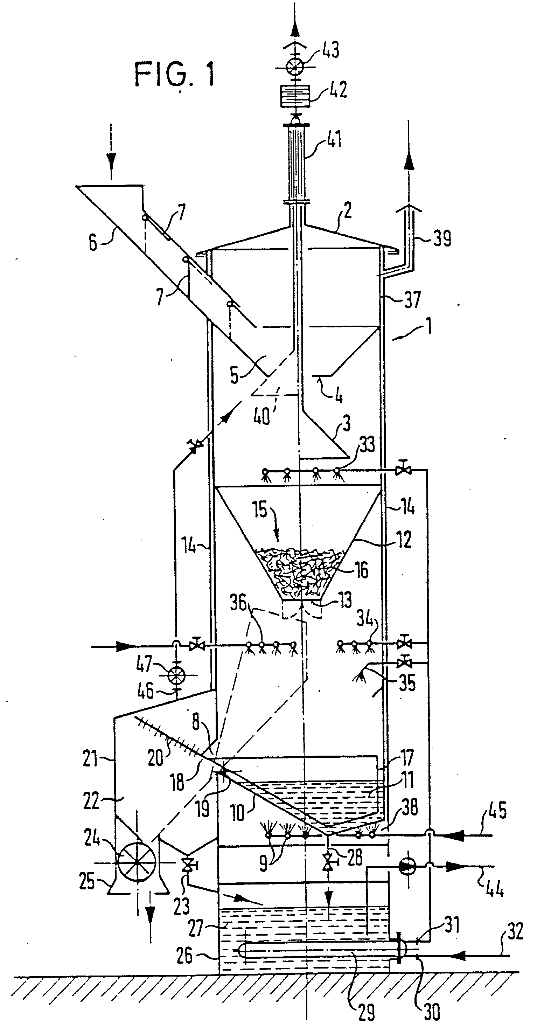

Die in Fig. 1 dargestellte Vorrichtung enthält einen doppelwandig ausgebildeten schachtförmigen Behälter 1, der oben durch einen Deckel 2 verschlossen ist. Der Behälter 1 weist oben eine durch eine Gichtglocke 3 verschließbare Eintrittsöffnung 4 für die zu behandelnden Verbundkörper auf. Der Gichtglockenverschluß ist in der linken Hälfte des Behälters in der geschlossenen Position und in der rechten Hälfte in der geöffneten Position dargestellt und dient nicht nur für den Abzug der Gase bzw. Dämpfe aus dem Behälter 1, sondern auch zur Dosierung der zugeführten Menge an Verbundkörpern. Oberhalb des Gichtglockenverschlusses befindet sich ein Speicherraum 5, dem die zu behandelnden Verbundkörper über einen Einfülltrichter 6 zuführbar sind, der durch Klappen 7 als Schleuse ausgebildet ist. Im unteren Bereich des schachtförmigen Behälters 1 befindet sich eine verschließbare Austrittsöffnung 8 für die Metallteile, deren Verschlußvorrichtung weiter unten erläutert wird.

Der Behälter 1 enthält unten eine durch Brenner 9 heizbare Wanne 10 für ein flüssiges Lösungsmittel 11, das zugleich die Reaktionszone darstellt.

Im mittleren Bereich des schachtförmigen Behälters 1 befindet sich ein gasdurchlässiger Zwischenboden 12, der in der Mitte eine verschließbare Öffnung 13 aufweist. Bei dem dargestellten Ausführungsbeispiel ist der schachtförmige Behälter im Querschnitt rechteckförmig ausgebildet, d. h. er weist vier jeweils doppelwandige Schachtwände 14 auf. Der Zwischenboden 12 verläuft von diesen Schachtwänden aus trichterförmig zur Mitte nach unten und besitzt an der untersten Stelle die verschließbare Öffnung 13. Der Zwischenboden 12 und der Verschluß der Öffnung 13 sind aus perforiertem Blech oder einem Drahtgitter gebildet, d. h. im vorliegenden Fall sowohl gasdurchlässig als auch flüssigkeitsdurchlässig. Oberhalb des trichterförmig ausgebildeten Zwischenbodens 12 befindet sich eine Vorwärmzone 15 für die hier zeitweise lagernden Verbundkörper 16.

Unterhalb des Zwischenbodens 12 ist ein in die Wanne eintauchbarer Korb 17 vorgesehen, dessen Wände bis auf den die Austrittsöffnung 8 verschließenden Abschnitt 18 flüssigkeitsdurchlässig ausgebildet sind. Sie können beispielsweise aus einem perforierten Blech, einem Drahtgitter oder einem Rost gebildet sein. Bei dem dargestellten. Ausführungsbeispiel ist der Korb 17 am unteren Rand der Austrittsöffnung 8 mittels eines Drehgelenkes 19 schwenkbar gelagert und zwischen einer durch ausgezogene Linien dargestellten, in die Wanne eintauchenden Behandlungsposition und einer gestrichelt dargestellten Entleerungsposition schwenkbar. Der Korb 17 weist eine schräge Seitenwand 20 auf, die durch die Austrittsöffnung 8 für die Metallteile hindurchgeführt ist, und mit der der Korb durch das Drehgelenk 19 am unteren Rand dieser Öffnung gelagert ist. In der Behandlungsposition verschließt die schräge Seitenwand 20 mit ihrem Abschnitt 18 die Austrittsöffnung 8. Diese mündet bei dem Ausführungsbeispiel in eine durch eine Abdeckung 21 gebildete geschlossene Entnahmekammer 22, die mit einem Abfluß 23 und mit einem eine Schleuse 24 enthaltenden Fallrohr 25 versehen ist.

Unterhalb des schachtförmigen Behälters 1 ist ein Tank 26 für bereits benutztes Lösungsmittel 27 angeordnet, der sowohl mit dem absperrbaren Abfluß 23 aus der Entnahmekammer als auch mit einem absperrbaren Abfluß 28 der Wanne 10 in Verbindung steht. Innerhalb des Tanks 26 befindet sich ein indirekter Wärmetauscher 29 mit einem Einlaß 30 und einem Auslaß 31 für das über eine Leitung 32 gelieferte, durch den Wärmetauscher 29 aufzuwärmende Lösungsmittel. Der Auslaß 31 des Wärmetauschers 29 ist über Leitungen mit Düsen 33 bis 35 verbunden, durch die das im Wärmetauscher vorgewärmte Lösungsmittel der Vorwärmzone 15 bzw. der Reaktionszone zuführbar und das verbrauchte Lösungsmittel ergänzbar ist. Es sind außerdem Düsen 36 für die Zufuhr eines kalten Lösungsmittels oder von Zusätzen vorgesehen.

Die Wände 14 sind, wie bereits erwähnt wurde, doppelwandig ausgebildet. Zwischen den Wänden befindet sich ein Zwischenraum 37, der mit der die Brenner 9 enthaltenden Heizkammer 38 in Verbindung steht und als Rauchabzug dient. Oben ist der Zwischenraum 37 mit einem Kamin 39 verbunden. Hierdurch können die heißen Rauchgase für die Erwärmung des schachtförmigen Behälters nutzbar gemacht werden. Zu diesem Zweck sollte die Innenwand temperaturleitend und die Außenwand isolierend ausgebildet sein.

Der schachtförmige Behälter 1 enthält oben, jedenfalls aber oberhalb der Vorwärmzone 15 einen Gasauslaß 40, der im vorliegenden Fall durch den Gichtglockenverschluß gebildet ist. An den Gasauslaß 40 schließt sich ein Rückflußkühler 41, ein Abgasfilter 42 und eine Absaugvorrichtung 43 an. Die abgesaugten und gereinigten Gase werden dann ins Freie geleitet.

Mit 44 ist ein Auslaß aus dem Tank 26 und mit 45 eine Zuleitung zu den Brennern 9 bezeichnet. Da die benutzte oder auch verbrauchte viskose Flüssigkeit 27 des Tanks 26 brennbar ist, kann der Auslaß 44 über eine Dosiereinrichtung mit der Zuleitung 45 in Verbindung stehen.

Auch die Entnahmekammer 22 für die Metallteile weist einen Gasauslaß 46 auf, der über eine Absaugvorrichtung 47 mit dem Raum unterhalb des Gasauslasses 40 im Behälter 1 in Verbindung steht.

Es wird nun die Durchführung des Verfahrens mit der beschriebenen Vorrichtung erläutert.

Wenn das Lösungsmittelbad 11 in der Wanne 10 durch die Brenner 9 auf die gewünschte Temperatur, beispielsweise 250 °C gebracht worden ist, werden die über den Trichter 6 in den Speicherraum 5 chargierten Verbundkörper durch Absenken des Glockenverschlusses 3 in der gewünschten Menge in die Vorwärmzone 15 befördert und nach dem Schließen des Gichtverschlusses der Betriebsdruck, beispielsweise 0,7 bar eingestellt. Die heißen Lösungsmitteldämpfe steigen aufgrund der Sogwirkung durch die Absaugvorrichtung nach oben und durchströmen hierbei das in der Vorwärmzone 15 vorübergehend gelagerte Gut. Im Wärmetausch mit den zu behandelnden Verbundkörpern werden die heißen Dämpfe abgekühlt und der größte Anteil durch Kondensation wieder in den flüssigen Zustand übergeführt. Die Restgasmenge gelangt durch den Gasauslaß 40 in den Rückflußkühler 41 und wird hier zum größten Teil kondensiert und im flüssigen Zustand wieder in den Behandlungsraum zurückgeführt. Der nichtkondensierte Rest gelangt über das Filter 42 ins Freie.

Wenn die Verbundkörper in der Vorwärmzone 15 eine Temperatur zwischen 50 und 150 °C erreicht haben, ist unter der Einwirkung der Lösungsmitteldämpfe die Haftung zwischen dem Metall und den nichtmetallischen Komponenten bereits wesentlich herabgesetzt. Es wird nun die Öffnung 13 freigegeben. Die vorgewärmten Verbundkörper 16 fallen in den Korb 17 und werden nun dem heißen Lösungsmittelbad ausgesetzt. Innerhalb kurzer Zeit wird das nichtmetallische Material abgelöst und aufgelöst. Wenn dieser Vorgang beendet ist, wird der Korb 17 aus der Behandlungsposition in die hochgeschwenkte Entleerungsposition gebracht, so daß die im Korb befindlichen von Gummi bzw. Kunststoff befreiten Metallteile über die schräge Wand 20 in das Fallrohr 25 gelangen. Da die schräge Wand 20 mit Ausnahme des Abschnittes 18 perforiert ist, fließt die aus dem Lösungsmittelbad 11 mitgenommene Flüssigkeit während dieses Transports zum Teil ab und kann über den Ablaß 23 abgezogen werden.

Die während des Prozesses verbrauchte Lösungsmittelmenge wird durch Zugabe von frischem Lösungsmittel über die Düsen 33 bis 36 dosiert ersetzt, so daß der Spiegel des Flüssigkeitsbades im Korb 17 konstant gehalten wird. Über den Abfluß 28 der Wanne 10 kann die aus dem aufgelösten Gummi und/oder Kunststoff und dem nichtverbrauchten Lösungsmittel entstandene viskose Flüssigkeit teilweise oder ganz in den Tank 26 abgelassen und über die Brausen oder eine nicht dargestellte direkte Zuleitung zur Wanne 10 durch frisches unverbrauchtes Lösungsmittel ersetzt werden.

Während des Auflösungsprozesses der in den Korb 17 chargierten vorgewärmten Verbundkörper wird bereits die nächste Charge in der Vorwärmzone 15 vorgewärmt, die unmittelbar nach dem Austrag der vorhergehenden Charge aus dieser Zone und nach Verschluß der Öffnung 13 über den Gichtglockenverschluß 4 dosiert in die Vorwärmzone 15 gebracht worden war.

Es soll noch bemerkt werden, daß durch Zufuhr frischen Lösungsmittels über die Düsen 33 der Auflösungsprozeß der nichtmetallischen Komponenten bereits in der Vorwärmzone eingeleitet werden kann, da durch ausreichende Zugabe des Lösungsmittels an dieser Stelle eine vollständige Benetzung der Verbundkörper mit dem flüssigen Lösungsmittel erreicht werden kann.

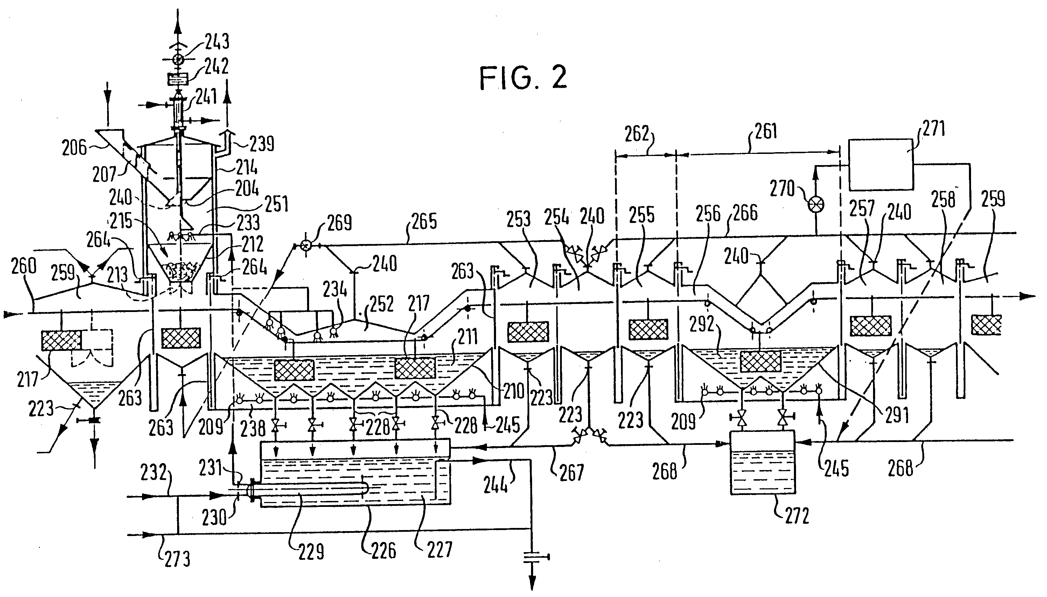

Während die beschriebene Vorrichtung gemäß Fig. 1 insbesondere für die Ab- und Auflösung der nichtmetallischen Komponenten von kleineren Verbundkörpern aus Metall und Gummi bzw. Kunststoff bestimmt ist, ist die Vorrichtung nach Fig. 2, die nunmehr beschrieben wird, in erster Linie für größere Verbundkörper gedacht. Bei der Beschreibung dieser Vorrichtung werden für die der Vorrichtung nach Fig. 1 entsprechenden Teile Bezugszahlen verwendet, die aus den Bezugszahlen der Fig. 1 jeweils durch Addition von 200 entstanden sind. Damit erübrigt sich eine detaillierte Beschreibung der betreffenden Teile und ihrer Wirkungsweise.

Bei der in Fig. 2 dargestellten Ausführungsform sind mehrere aneinandergrenzende Kammern 251 bis 259 in einem geschlossenen Ring angeordnet, der in Fig. 2 in der Abwicklung dargestellt ist. Die Kammer 259 ist zum Teil am Ende und zum Teil am Anfang der Abwicklung gezeichnet. Der Ring ist aus Platzgründen zweckmäßig oval.

Durch die Kammern sind mit Hilfe eines endlosen Förderseils 260 Körbe 217 transportierbar, deren Böden und/oder Wände gas- und flüssigkeitsdurchlässig sind. Um zu gewährleisten, daß längs der Förderbahn der Körbe 217 diese zeitweise innerhalb einer Kammer angehalten werden können, entsprechen die Abmessungen der Kammer längs der Förderbahn der Förderkörbe 217 einem Einheitsmaß oder einem ganzzahligen Vielfachen hiervon und die Körbe sind auch am Förderseil 260 in einem dem Einheitsmaß oder einem ganzzahligen Vielfachen hiervon entsprechenden Abstand befestigt. Im vorliegenden Fall entsprechen die Abmessungen der Kammern 251, 253 bis 255 sowie 257 und 258 längs der Förderbahn dem Einheitsmaß, die der Kammern 256 und 259 dem Zweifachen des Einheitsmaßes und die der Kammer 252 dem Dreifachen des Einheitsmaßes. Es soll an dieser Stelle betont werden, daß die Förderbahn der Körbe 217 maßgeblich ist, so daß beispielsweise bei der Kammer 256 wegen der Absenkung der Förderbahn das Längenmaß 261 etwas kleiner als das Zweifache des Längenmaßes 262 der Kammer 255 ist, die das Einheitsmaß darstellt.

Zwischen den einzelnen Kammern sind Wände 263 vorgesehen, die mittels individueller Antriebe 264 zwischen einer geschlossenen Position und einer die Förderbahn freigebenden Position verschiebbar sind. Die Wand 263 an der Eintrittsseite der Kammer 251 ist in der geschlossenen Position, die an der Austrittsseite der Kammer 251, die gleichzeitig der Eintrittsseite der Kammer 252 entspricht, in der die Förderbahn freigebenden Position dargestellt. Durch die verschiebbaren Wände 263 ist es einerseits möglich, zwei benachbarte Kammern voneinander zu trennen und andererseits möglich, die Förderkörbe 217 von einer zur nächsten oder übernächsten Kammer längs der Förderbahn weiterzutransportieren.

Jede der Kammern weist im oberen Bereich einen Gasauslaß 240 auf. Außerdem sind den einzelnen Kammern Abflüsse 223 zugeordnet. Die Gasauslässe der Kammern 252 und 253 sind mit einer Gasleitung 265 verbunden, die Auslässe 240 der Kammern 255 bis 259 mit einer Gasleitung 266. Der Abfluß der Kammer 253 mündet in eine Rückflußleitung 267 und die Abflüsse der Kammern 255 bis 259 in Rückflußleitungen 268. Der Gasauslaß 240 der Kammer 254 ist durch Ventile wahlweise an die Gasleitung 265 und die Gasleitung 266 und der Abfluß 223 dieser Kammer wahlweise an die Rückflußleitung 267 und die Rückflußleitung 268 anschließbar. Die Gasleitung 265 führt über eine Absaugvorrichtung 269 zur Kammer 251, die Gasleitung 266 über eine Absaugvorrichtung 270 und eine Einrichtung 271 zur Rückgewinnung des Reinigungsmittels aus den abgezogenen Dämpfen in einen Speicher 272 für das Reinigungsmittel. Die Rückfluß, leitung 267 führt in den Tank 226 für verbrauchtes Lösungsmittel und die Rückflußleitung 268 in den Reinigungsmittelbehälter 272.

Bei dem Ausführungsbeispiel nach Fig. 2 ist die Vorwärmzone 215 in der Kammer 251 angeordnet und die das Lösungsmittelbad 211 enthaltende Wanne 210 in der Kammer 252. Die Vorheizzone 215 befindet sich hier also neben der Wanne und kann von dieser durch die Wand 263 zwischen den Kammern getrennt werden. Im vorliegenden Fall ist die Förderbahn innerhalb der Kammer 252 abgesenkt, so daß die Körbe 217 in das Lösungsmittelbad 211 eintauchen können.

Die Kammer 253 dient als Schleuse und Abtropfzone, die Kammer 254 als Pufferzone, die Kammer 255 als Schleuse und Vorwärmzone für ein Reinigungsbad, die Kammer 256 als Reinigungszone, die Kammer 257 als Schleuse und Abtropfzone, die Kammer 258 als Pufferzone und die Kammer 259 als Entnahmezone und ggf. als Chargierzone.

Die Kammer 256, die zur Reinigung der von den nichtmetallischen Komponenten befreiten Metallteile dient, enthält ebenso wie die Kammer 252 eine durch Brenner 209 beheizte Wanne 291 mit einer Reinigungsflüssigkeit 292 beispielsweise aus Trichloräthylen.

Die als Pufferzonen wirkenden Kammern 254 und 259 sind vorgesehen, um eine Vermischung von Lösungsmittel und Reinigungsmittel zu verhindern (Pufferzone der Kammer 254, die wahlweise an den Lösungsmittelkreislauf und an den Reinigungsmittelkreislauf anschließbar ist) und um einen Austritt von Lösungsmitteldämpfen in die als Entnahmezone vorgesehene Kammer 259 zu verhindern.

Es wird nun die Arbeitsweise der Vorrichtung nach Fig. 2 erläutert. Hierbei wird angenommen, daß die Vorrichtung bereits seit einiger Zeit läuft und die Körbe, die dargestellte Position einnehmen.

Die zu behandelnden Verbundkörper werden, wie bei der Vorrichtung nach Fig. 1, durch den Trichter 206 in den schachtförmigen Behälter 214 chargiert und durch den Glockenverschluß 204 dosiert in die Vorwärmzone 215 gebracht, in der sie durch die heißen Dämpfe des in der Wanne 210 erhitzten Lösungsmittels 211 vorgewärmt werden. Während des Vorwärmprozesses wird der in der Kammer 259 befindliche Korb 217 seitlich entladen, d. h. es werden die von den nicht metallischen Komponenten befreiten und gereinigten Metallteile aus dem Korb entnommen. In der Kammer 251 befindet sich während des Vorwärmprozesses unterhalb der trichterförmig ausgebildeten Trennwand 212' ein leerer Korb 217, der nach Beendigung des Vorwärmprozesses durch Öffnen der Öffnung 213 der Trennwand 212 mit dem vorerwärmten Material beschickt wird. Während der beschriebenen Periode befinden sich die Trennwände 263 zwischen den Kammern in der dargestellten Position. Im nächsten Arbeitstakt werden die Körbe 217 durch das Förderseil 260 um eine Position weiterbewegt (in der Zeichnung nach rechts), wobei rechtzeitig vor dem Wechsel in die nächste Kammer die Förderbahn durch Absenken der betreffenden Wände freigegeben wird. So werden die Körbe schrittweise längs der Förderbahn bewegt und behandelt. In der Kammer 251 erfolgt die Vorwärmung, in der Kammer 252 durch Eintauchen in das heiße Lösungsmittelbad 211 das Ablösen und Auflösen der nicht metallischen Komponenten, in der Kammer 253 kann die Lösungsmittelflüssigkeit abtropfen, in der Kammer 255 erfolgt die Vorwärmung durch die Dämpfe der Reinigungsflüssigkeit 272, in der Kammer 256 werden die metallischen Teile gereinigt, in der Kammer 257 kann die Reinigungsflüssigkeit abtropfen und in der Kammer 259 werden die gereinigten Metallteile, wie bereits beschrieben, manuell oder durch eine Vorrichtung seitlich entnommen.

Die als Pufferzone wirkende Kammer 254 ist in der dargestellten Position an den Lösungsmittelkreislauf angeschlossen. Ist der gerade in der Kammer 253 befindliche Korb um einen halben Schritt in die Kammer 254 weiterbewegt worden, dann werden die zwischen den Kammern 252 und 256 befindlichen Wände 263 in die zur dargestellten Position entgegengesetzte Position gebracht und damit die als Pufferzone dienende Kammer 254 von der als Schleuse dienenden Kammer 253 getrennt. Danach werden der Gasauslaß 240 und der Ablaß 223 der Kammer 254 vom Lösungsmittelkreislauf in den Reinigungsmittelkreislauf umgeschaltet. Wenn nach dem nächsten Halbschritt der betreffende Korb die Kammer 255 erreicht hat, wird durch die Wände 263 die Kammer 255 eintrittsseitig wieder verschlossen und austrittsseitig geöffnet, um der Einwirkung der heißen Dämpfe des Reinigungsmittels ausgesetzt werden zu können. Die als Pufferzone dienende Kammer 258 arbeitet in ähnlicher Weise.

Anstelle einer Chargierung der zu behandelnden Verbundkörper durch den Trichter 206 oder zusätzlich zu dieser ist auch eine Chargierung in der Kammer 259 möglich, nachdem die gereinigten Metallteile entnommen worden sind. Insbesondere bei schweren größeren Teilen ist dieser Art des Chargierens der Vorzug zu geben.

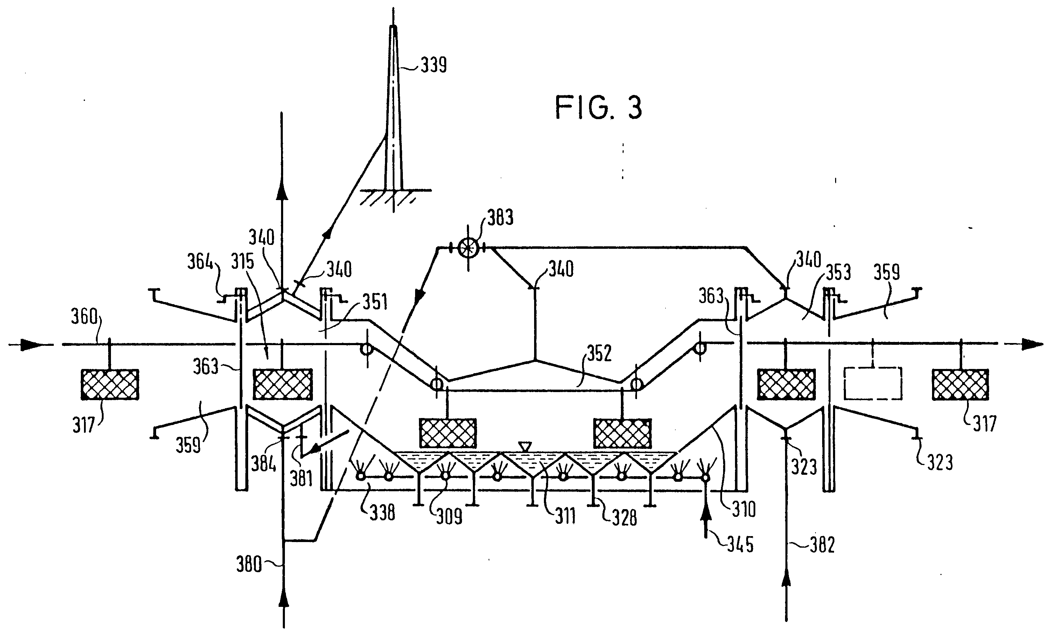

Bei der in Fig. 3 dargestellten Vorrichtung sind Teile die denen der Vorrichtung nach Fig. 2 entsprechen durch eine Bezugszahl gekennzeichnet, die gegenüber der Bezugszahl des betreffenden Teils von Fig. 2 um 100 vergrößert ist. Die Vorrichtung nach Fig. 3 entspricht im wesentlichen einem Teil der Vorrichtung nach Fig. 2, wobei die Verbundkörper nur in der Gasphase des Lösungsmittels behandelt werden. Zu diesem Zweck ist der Spiegel des Lösungsmittelbades in der Wanne 310 so weit erniedrigt, daß die Körbe 317 nicht mehr in das Bad eintauchen. Da in der Gasphase ein Auflösen der nicht metallischen Komponenten der Verbundkörper nicht möglich ist, entfällt im Vergleich zur Vorrichtung nach Fig. 2 auch das Reinigungsbad. Die Trennung der nicht metallischen Komponenten von den metallischen Komponenten erfolgt hier zweckmäßigerweise mechanisch nach Entleerung der Körbe 317 in der Entnahmeposition.

Die zu behandelnden Verbundkörper werden in der Vorwärmzone bei 315 in erster Linie durch über eine Leitung 380 zugeführte Heißluft oder über eine Leitung 381 zugeführte heiße Abgase aus der Heizkammer 338 vorgewärmt. Der Heißluft können auch die von den Kammern 352 und 353 abgezogenen Dämpfe zugemischt werden. Infolge der verschiebbaren Wände 363 kann die die Vorwärmzone 315 enthaltende Kammer 351 von der das Lösungsmittelbad 311 enthaltenden Kammer 352 getrennt werden und die Vorwärmung alleine durch heiße Luft oder durch die heißen Abgase der Heizkammer 338 erfolgen. Es können aber auch die heißen Dämpfe des Lösungsmittels unmittelbar von der Kammer 352 in die Kammer 315 eingeleitet werden. Die Kammer 353 ist im vorliegenden Fall auch als Kühlzone ausgebildet. Über die Leitung 382 wird Kühlluft in die Kammer geleitet. Die Gasauslässe 340 der Kammern 352 und 353 stehen bei diesem Ausführungsbeispiel über eine Absaugvorrichtung 383 mit dem Einlaß 384 für die Heißluft in Verbindung, die Gasauslässe 340 der Kammer 351 führen wahlweise zu einem nicht dargestellten Rückflußkühler oder in den Kamin.

Die Ergänzung des Lösungsmittelbades 311 kann über Düsen wie bei den bereits beschriebenen Ausführungsbeispielen oder durch Zuleitungen erfolgen. Im übrigen können auch die anhand der Fig. 1 und 2 erläuterten Zusatzeinrichtungen wie Tank etc. vorgesehen sein. Zur Ergänzung des Lösungsmittels kann auch verbrauchtes Lösungsmittel dienen, wenn dieses durch geeignete Zusätze ergänzt wird. Diese Möglichkeit ist bei der Vorrichtung nach Fig. 2 durch die Rückführung der Abflußleitung 244 in den Einlaß 230 angedeutet, wobei in die Rückführleitung eine Leitung 273 mündet, über die die geeigneten Zusätze zur Regenerierung des Lösungsmittels zugefügt werden können.

**Patentansprüche**

1. Verfahren zum Entfernen von Gummi und-/oder Kunststoff aus Verbundkörpern aus Metall und wenigstens einem dieser Materialien, bei dem die Verbundkörper in ein erhitztes flüssiges Lösungsmittel eines Reaktionsbehälters eingetaucht, vor dem Eintauchen den heißen Dampfen des Lösungsmittels ausgesetzt und nach dem Ablösen des Gummis und/oder Kunststoffs im flüssigen Lösungsmittel aus dem Reaktionsbehäl-ter ausgetragen werden, dadurch gekennzeich-net, daß die Verbundkörper vor dem Eintauchen so lange den heißen Dämpfen des Lösungsmittels ausgesetzt werden, daß sie durchwärmt werden und der Haftverbund zwischen dem Metall und dem Gummi und/oder Kunststoff herabgesetzt wird.

2. Verfahren nach Anspruch 1, dadurch gekennzeichnet, daß die Behandlung im Reaktionsbehälter bei einem absoluten Gasdruck im Bereich von 0,5 bis 4,0 bar (absolut) erfolgt, daß die Temperatur des Lösungsmittels auf einen Betrag zwischen 150 bis 550 °C eingestellt wird, und daß die Verbundkörper in der Vorwärmzone auf eine Temperatur zwischen 50 und 150 °C erhitzt wer-den.

3. Verfahren nach Anspruch 1 oder 2, dadurch gekennzeichnet, daß die Metallteile nach dem Eintauchen in das heiße Lösungsmittel in ein Reinigungsbad getaucht werden.

4. Verfahren zum Entfernen von Gummi und-/oder Kunststoff aus Verbundkörpern aus Metall und wenigstens einem dieser Materialien unter Verwendung eines erhitzten flüssigen Lösungsmittels in einem Reaktionsgefäß, dadurch gekennzeichnet, daß die Verbundkörper in einer Vorwärmzone durch heiße Gase erhitzt, hierbei durchwärmt und der Haftverbund zwischen dem Metall und dem Gummi und/oder Kunststoff herabgesetzt, und die durchwärmten Verbundkörper anschließend im Reaktionsbehälter den heißen Dampfen des erhitzten Lösungsmittels ausgesetzt werden.

5. Vorrichtung zur Durchführung des Verfahrens nach einem der Ansprüche 1 bis 4, mit einem Reaktionsbehälter (1), der eine verschließbare Eintrittsöffnung (4, 204) für die zu behandelnden Verbundkörper (16), eine verschließbare Austrittsöffnung (8) für die Metallteile und eine heizbare Wanne (10, 210) für das Lösungsmittel enthält, dadurch gekennzeichnet, daß oberhalb oder neben der Wanne eine Vorwärmzone (15, 215) für die Verbundkörper (16) vorgesehen ist und Mittel (12, 260/217, 360/317) vorhanden sind, um die Verbundkörper für die zum Vorwärmen erforderliche Zeitdauer in der Vorwärmezone zu halten.

6. Vorrichtung nach Anspruch 5, dadurch gekennzeichnet, daß die Vorwärmzone (15, 215) für die Verbundkörper (16) oberhalb eines gasdurchlässigen Zwischenbodens (12, 212) im mittleren Bereich eines schachtförmigen Behälters (1) gebildet ist, der Zwischenboden eine verschließbare Öffnung (13, 213) aufweist und die Eintrittsöffnung (4, 204) für die Verbundkörper (16) oberhalb des Zwischenbodens (12, 212) vorgesehen ist.

7. Vorrichtung nach Anspruch 6, dadurch gekennzeichnet, daß der Zwischenboden (12, 212) von der Schachtwand bzw. den Schachtwänden (14, 214) des schachtförmigen Behälters (1) aus trichterförmig zur Mitte des Behälters nach unten verläuft und an der untersten Stelle die verschließbare Öffnung (13, 213) vorgesehen ist.

8. Vorrichtung nach einem der Ansprüche 5 bis 7, dadurch gekennzeichnet, daß die Eintrittsöffnung für die Verbundkörper einen Gichtglockenverschluß (40, 240) aufweist.

9. Vorrichtung nach einem der Ansprüche 6 bis 8, dadurch gekennzeichnet, daß der schachtförmige Behälter (1) doppelwandig ausgebildet ist und der Zwischenraum zwischen den beiden Wänden (14) den Rauchabzug einer unter der Wanne angeordneten Heizkammer (38) bildet.

10. Vorrichtung nach einem der Ansprüche 6 bis 9, dadurch gekennzeichnet, daß die heizbare Wanne (10) im unteren Bereich des schachtförmigen Behälters (1) angeordnet ist und die Austrittsöffnung (8) für die Metallteile zwischen dem Zwischenboden (12) und der Wanne (10) vorgesehen ist.

11. Vorrichtung nach Anspruch 10, dadurch gekennzeichnet, daß unterhalb des Zwischenbodens (12) ein in die Wanne (10) eintauchbarer Korb (17) vorgesehen ist.

12. Vorrichtung nach Anspruch 11, dadurch gekennzeichnet, daß der Korb (17) am unteren Rand der Austrittsöffnung (8) für die Metallteile schwenkbar gelagert und zwischen einer in die Wanne (10) eintauchenden Behandlungsposition und einer hochgeschwenkten Entleerungsposition schwenkbar ist.

13. Vorrichtung nach einem der Ansprüche 5 bis 12, dadurch gekennzeichnet, daß die verschließbare Austrittsöffnung in eine geschlossene Entnahmekammer (22) mündet, die mit einem Abfluß (23) und mit einem eine Schleuse (24) enthaltenden Fallrohr (25) versehen ist.

14. Vorrichtung nach einem der Ansprüche 5 bis 13, dadurch gekennzeichnet, daß ein mittels einer Fördereinrichtung längs einer Förderbahn transportierbarer Korb (217) vorgesehen ist, dessen Boden und/oder Wände gas- und flüssigkeitsdurchlässig sind, und der zwischen einer Position neben oder oberhalb der Wanne (Vorwärmzone) in eine Position innerhalb der Wanne (210) transportierbar ist.

15. Vorrichtung nach einem der Ansprüche 5 bis 13, dadurch gekennzeichnet, daß ein mittels einer Förderungseinrichtung längs einer Förderbahn transportierbarer Korb (317) vorgesehen ist, dessen Boden und/oder Wände gas- und flüssigkeitsdurchlässig sind, und der zwischen einer Position neben der Wanne (310) in eine Position oberhalb der Wanne transportierbar ist.

16. Vorrichtung nach Anspruch 14 oder 15, dadurch gekennzeichnet, daß längs der Förderbahn mehrere aneinandergrenzende Kammern (251 bis 259 ; 351, 352, 353, 359) angeordnet sind, deren Abmessungen gemessen längs der Förderbahn einem Einheitsmaß oder einem ganzzahligen Vielfachen hiervon entsprechen.

17. Vorrichtung nach Anspruch 16, dadurch gekennzeichnet, daß wenigstens ein Teil der Kammern eintrittsseitig und/oder austrittsseitig Wände (263, 363) bzw. Wandabschnitte enthält, die zwischen einer geschlossenen Position und einer die Förderbahn freigebenden Position verschiebbar sind.

18. Vorrichtung nach einem der Ansprüche 5 bis 17, dadurch gekennzeichnet, daß unterhalb der Wanne (10, 210, 310) Brenner (9, 209, 309) angeordnet sind.

**Claims**

1. A process for removing rubber and/or plastic material from composite bodies comprising metal and at least one of said materials, dipping in said composite bodies into a heated liquid solvent of a reaction vessel, exposing said composite bodies to hot vapours of the solvent before dipping them into the solvent and discharging them from the reaction container after the rubber and/or plastic material has been separated, characterized in that said composite bodies are exposed to the hot vapours of the solvent as long as to be located through and the bond between the metal and the rubber and/or plastic material is reduced.

2. A process according to claim 1, characterized in that the treatment in the reaction container is carried out at an absolute gas pressure in the range of from 0.5 to 4.0 bars (absolute), that the temperature of the solvent is set to a value of from 150 to 550 °C, and that the composite bodies are heated in the preheating zone to a temperature of from 50 to 150 °C.

3. A process according to claim 1 or claim 2, characterized in that, after being dipped into the hot solvent, the metal members are plunged into a cleaning bath.

4. A process for removing rubber and/or plastic material from composite bodies comprising metal and at least reaction vessel characterized in that the composite bodies are preheated in a preheating zone by means of hot gases whereby they are heated through and the bond between the metal and the rubber and/or plastic material is reduced and that the heated through composite bodies are then exposed in the reaction container to the hot vapours of the heated solvent.

5. Apparatus for carrying out the process according to one of claims 1 to 4, comprising a reaction container (1) which includes a closable intake opening (4, 204) for the composite bodies (16) to be treated, a closable outlet opening (8) for the metal members and a heatable tank (10, 210) for the solvent characterized in that a preheating zone (15, 215) for the composite bodies (16) is provided above or beside the thank and that means (12, 260/217, 360/317) are provided in order to keep the composite bodies in the preheating zone during a time period necessary for the preheating step.

6. Apparatus according to claim 5, characterized in that the preheating zone (15, 215) for the composite bodies (16) is formed above a gas-permeable intermediate floor (12, 212) in the middle region of a shaft-like container (1), the intermediate floor has a closable opening (13, 213), and the intake opening (4, 204) for the composite bodies (16) is provided above the intermediate floor (12, 212).

7. Apparatus according to claim 6, characterized in that the intermediate floor (12, 212) extends downwardly in a funnel configuration towards the centre of the container (1) from the shaft wall or walls (14, 214) of the shaft-like container (1), and the closable opening (13, 213) is provided at the lowermost position.

8. Apparatus according to one of claims 5 to 7, characterized in that the intake opening for the composite bodies has a belltype closure means (40, 240).

9. Apparatus according to one of claims 6 to 8, characterized in that the shaft-like container (1) is of a double-walled construction and the intermediate space, between the two walls (14), forms the smoke discharge of a heating chamber (38) which is disposed beneath the tank.

10. Apparatus according to one of claims 6 to 9, characterized in that the heatable tank (10) is disposed in the lower region of the shaft-like container (1) and the outlet opening (8) for the metal members is provided between the intermediate floor (12) and the tank (10).

11. Apparatus according to claim 10, characterized in that disposed beneath the intermediate floor (12) is a basket (17) which can be dipped into the tank (10).

12. Apparatus according to claim 11, characterized in that the basked (17) is mounted pivotably at the lower edge of the outlet opening (8) for the metal members and is pivotable between a treatment position in which it is dipped into the tank (10) and an upwardly pivoted emptying position.

13. Apparatus according to one of claims 5 to 12, characterized in that the closable outlet opening opens into a closed removal chamber (22) which is provided with a flow discharge means (23) and a down pipe (25) including a discharge control valve means (24).

14. Apparatus according to one of claims 5 to 13, characterized in that there is provided a basket (217) which is transportable along a conveyor path by means of a conveyor device and whose bottom and/or walls are gas-permeable and liquid-permeable and which can be transported between a position beside or above the tank (preheating zone) into a position within the tank (210).

15. Apparatus according to one of claims 5 to 13, characterized in that there is provided a basket (317) which can be transported along a conveyor path by means of conveyor device and whose bottom and/or walls are gas-permeable and liquid-permeable and which can be transported between a position beside the tank (310) into a position above the tank.

16. Apparatus according to claim 14 or claim 15, characterized in that, disposed along the conveyor path are a plurality of mutually adjoining chambers (251 to 259 ; 351, 352, 353, 359) whose dimensions, as measured along the conveyor path, correspond to an unit measurement or an integral multiple thereof.

17. Apparatus according to claim 16, characterized in that at least some of the chambers, at the intake side and/or the outlet side, include walls (263, 363) or wall portions which are displaceable between a closed position and a position of opening the conveyor path.

18. Apparatus according to one of claims 5 to 17, characterized in that burners (9, 209, 309) are arranged beneath the tank (10, 210, 310).

**Revendications**

1. Procédé pour enlever du caoutchouc et/ou de la matière plastique de pièces composites en métal et en au moins l'un de ces matériaux, qui consiste à immerger les pièces composites dans un solvant liquide chauffé d'une cuve de réaction, à les soumettre, avant l'immersion, aux vapeurs chaudes du solvant, et à les enlever de la cuve de réaction après détachement du caoutchouc et/ou de la matière plastique dans le solvant liquide, caractérisé en ce qu'il consiste à soumettre, avant l'immersion, les pièces composites aux vapeurs chaudes du solvant, jusqu'à ce qu'elles soient réchauffées à cœur et jusqu'à ce que l'adhérence entre le métal et le caoutchouc et/ou la matière plastique soit diminuée.

2. Procédé suivant la revendication 1, caractérisé en ce qu'il consiste à effectuer le traitement dans une cuve de réaction sous une pression absolue des gaz comprise entre 0,5 et 4,0 bars, à régler la température du solvant à une valeur comprise entre 150 et 550 °C, et à porter les pièces composites dans la zone de préchauffage à une température comprise entre 50 et 150 °C.

3. Procédé suivant la revendication 1 ou 2, caractérisé en ce qu'il consiste, après immersion dans le solvant chaud, à immerger les parties métalliques dans un bain de nettoyage.

4. Procédé pour enlever du caoutchouc et/ou la matière plastique de pièces composites en métal et en au moins l'un de ces matériaux en utilisant un solvant liquide chauffé dans un récipient de réaction, caractérisé en ce qu'il consiste à chauffer les pièces composites dans une zone de préchauffage par des gaz chauds, en les chauffant ainsi à cœur et en diminuant l'adhérence entre le métal et le caoutchouc et/ou la matière plastique, et ensuite à soumettre les pièces composites chauffées à cœur, dans la cuve de réaction, aux vapeurs chaudes du solvant chauffé.

5. Installation pour la mise en œuvre du procédé suivant l'une des revendications 1 à 4, comprenant une cuve de réaction (1), qui comporte un orifice d'entrée (4, 204) pouvant être fermé et destiné aux pièces composites (16) à traiter, un orifice de sortie (8), qui peut être fermé et qui est destiné aux pièces métalliques, et une cuve (10, 210) qui peut être chauffée et qui est destinée au solvant, caractérisée en ce qu'au-dessus ou à côté de la cuve est prévue une zone de préchauffage (15, 215) des pièces composites (16), et il est prévu des moyens (12, 260/217, 360/317) pour maintenir les pièces composites dans la zone de préchauffage pendant la durée nécessaire au préchauffage.

6. Installation suivant la revendication 5, caractérisée en ce que la zone de préchauffage (15, 215) des pièces composites (16) est formée au-dessus d'un plateau intermédiaire (12, 212) perméable au gaz dans la partie médiane d'une cuve (1) en forme de puits, le plateau intermédiaire comportant un orifice (13, 213), qui peut être fermé et l'orifice d'entrée (4, 204) des pièces composites (16) étant prévu au-dessus du plateau intermédiaire (12, 212).

7. Installation suivant la revendication 6, caractérisée en ce que le plateau intermédiaire (12, 212) s'étend vers le bas de la paroi du puits ou des parois du puits (14, 214) de la cuve (1) en forme de puits, à la manière d'un entonnoir, en direction du milieu de la cuve, et l'orifice (13, 213), qui peut être fermé, est prévu à l'endroit le plus bas.

8. Installation suivant l'une des revendications 5 à 7, caractérisée en ce que l'orifice d'entrée des pièces composites comporte un dispositif de fermeture en forme de cloche de haut fourneau (40, 240).

9. Installation suivant l'une des revendications 6 à 8, caractérisée en ce que le récipient (1) en forme de puits est à double paroi, et l'espace intermédiaire compris entre les deux parois (14) forme le conduit d'évacuation des fumées d'une chambre de chauffage (38) disposée sous la cuve.

10. Installation suivant l'une des revendications 6 à 9, caractérisée en ce que la cuve (10) qui peut être chauffée est disposée dans la partie inférieure de la cuve (1) en forme de puits et l'orifice de sortie (8) des parties métalliques est prévu entre le plateau intermédiaire (12) et la cuve (10).

11. Installation suivant la revendication 10, caractérisée en ce qu'en-dessous du plateau intermédiaire (12) est prévu un panier (17) qui peut être immergé dans la cuve (10).

12. Installation suivant la revendication 11, caractérisée en ce que le panier (17) est monté basculant sur le bord inférieur de l'orifice de sortie (8) des parties métalliques et peut basculer entre une position de traitement, où il est plongé dans la cuve, et une position de vidange, où il est basculé vers le haut.

13. Installation suivant l'une des revendications 5 à 12, caractérisée en ce que l'orifice de sortie, qui peut être fermé, débouche dans une chambre de prélèvement (22) fermée qui est munie d'une évacuation (23) et d'un tube de descente (25) contenant un sas (24).

14. Installation suivant l'une des revendications 5 à 13, caractérisée en ce qu'il est prévu un panier (217) qui peut être transporté, le long d'une voie de transport, au moyen d'un dispositif convoyeur, dont le fond et/ou les parois sont perméables aux gaz et aux liquides, et qui peut être transporté entre une position à côté ou au-dessus de la cuve (zone de préchauffage) et une position à l'intérieur de la cuve (210).

15. Installation suivant l'une des revendications 5 à 13, caractérisée en ce qu'il est prévu un panier (317) pouvant être transporté le long d'une voie de transport, au moyen d'un dispositif convoyeur dont le fond et/ou les parois sont perméables aux gaz et aux liquides, et qui peut être transporté entre une position à côté de la cuve (310) et une position au-dessus de la cuve.

16. Installation suivant la revendication 14 ou 15, caractérisée en ce que, le long de la voie de transport, sont prévues plusieurs chambres adjacentes (251 à 259 ; 351, 352, 353, 359) dont les dimensions, mesurées le long de la voie de transport, correspondent à la dimension unitaire de celles-ci ou à un multiple entier de cette dimension.

17. Installation suivant la revendication 16, caractérisée en ce qu'au moins une partie des chambres contient, du côté de l'entrée et/ou du côté de la sortie, des parois (263, 363) ou des sections de parois qui peuvent coulisser entre une position fermée et une position dégageant la voie de transport.

18. Installation suivant l'une des revendications 5 à 17, caractérisée en ce que des brûleurs (9, 209, 309) sont disposés en-dessous de la cuve (10, 210, 310).

FIG. 1

FIG. 2

EP 0 165 585 B1

FIG. 3